# EUROPÄISCHE PATENTSCHRIFT

(11) **EP 4 004 387 B1**
(45) Veröffentlichungstag und Bekanntmachung des Hinweises auf die Patenterteilung: **15.02.2023**
(21) Anmeldenummer: 20746592.3
(22) Anmeldetag: 22.07.2020
(51) Int. Cl.: F16B 19/02, F16B 35/04, F16C 19/00, F16C 33/00, F16D 65/00, F16D 65/02, F16D 55/2265, F16B 35/06, F16B 1/00

(54) **BEFESTIGUNGSELEMENT UND FERTIGUNGSVERFAHREN**
SECURING ELEMENT AND MANUFACTURING METHOD
ÉLÉMENT DE FIXATION ET PROCÉDÉ DE FABRICATION

(30) Priorität: 29.07.2019 DE 102019120362
(43) Veröffentlichungstag der Anmeldung: 01.06.2022
(73) Patentinhaber: KAMAX Holding GmbH & Co. KG, 35315 Homberg (Ohm) (DE)
(72) Erfinder: WALLMEIER, Stefan, 63773 Goldbach (DE); WAGNER, Frank, 35418 Großen Buseck (DE)
(74) Vertreter: Müller Schupfner & Partner Patent- und Rechtsanwaltspartnerschaft mbB
(86) Internationale Anmeldenummer: PCT/EP2020/070629
(87) Internationale Veröffentlichungsnummer: WO 2021/018678

(56) Entgegenhaltungen:
- EP-A1- 3 412 923
- EP-A2- 1 126 191
- FR-A1- 2 771 149
- KR-A- 20070 036 281
- US-A- 4 856 620
- US-A1- 2013 133 990

## Beschreibung

Die Erfindung betrifft ein Befestigungselement, insbesondere ein Spielpassungsbefestigungselement.

Befestigungselemente sind bereits aus dem Stand der Technik bekannt. Diese Elemente dienen dazu, zwei Bauteile miteinander derart zu verbinden, sodass Kräfte von dem einen Bauteil auf das andere Bauteil übertragen werden können. Häufig sind diese Befestigungselemente dabei derart ausgestaltet, sodass die zu befestigenden Bauteile beweglich zu einander sind. Dies wird insbesondere dadurch erreicht, dass zwischen einem zu befestigenden Element und dem Befestigungselement eine Spielpassung vorgesehen ist. Häufig ist jedoch - gerade bei einer exakten Führung des zu befestigenden Elements, dass eine gewisse Schwergängigkeit zwischen den zu befestigenden Bauteilen und dem Befestigungselement vorhanden sein kann, insbesondere durch den Eintritt von Korrosion und/oder durch die auftretende Reibung.

Die FR 2 771 149 zeigt einen Bolzen zum Führen einer Gabel eines Bügels einer Scheibenbremse bestehend aus einem zylindrischen Körper, der entlang seiner Länge mit spiralförmigen Nuten versehen ist.

Die US 2013/0133990 A1, die US 4,856,620 und die EP 1 126 191 A2 zeigen ebenfalls Führungsanordnungen zum Führen von relativ zueinander angeordneten Bauteilen.

Es ist daher die Aufgabe der Erfindung, eine Befestigungsmöglichkeit bereitzustellen, welche eine Leichtgängigkeit ermöglicht.

Diese Aufgabe wird mit einem Befestigungselement gemäß dem Anspruch 1, mit einem Montagesystem gemäß dem Anspruch 10 und mit einem Fertigungsverfahren gemäß dem Anspruch 14 gelöst.

Erfindungsgemäß umfasst ein Befestigungselement, insbesondere ein Montagebolzen, einen Festlegungsabschnitt, einen Zwischenabschnitt und einen Passungsabschnitt, wobei das Befestigungselement sich entlang einer Längsachse erstreckt, wobei der Festlegungsabschnitt Festlegungsstrukturen, insbesondere ein Gewinde, aufweist, wobei der Zwischenabschnitt in Richtung der Längsachse zwischen dem Festlegungsabschnitt und dem Passungsabschnitt angeordnet ist, wobei der Passungsabschnitt im Wesentlichen rotationssymmetrisch um die Längsachse ist, und wobei der Passungsabschnitt eine äußere Tragoberfläche aufweist, wobei die Tragoberfläche eine Spielpassung aufweist, und wobei zumindest im Passungsabschnitt zumindest eine Schmierrille vorhanden ist. Das erfindungsgemäße Befestigungselement dient insbesondere dazu, ein Montageteil mit einem Festlegungsteil derart zu verbinden, dass diese entlang der Längsachse relativ zueinander bewegbar sind, wobei durch das Befestigungselement jedoch Kräfte senkrecht zu dieser Längsachse bzw. Bewegungsachse aufgenommen bzw. übertragen werden können. In anderen Worten, kann das erfindungsgemäße Befestigungselement dazu dienen, eine Befestigung zu ermöglichen, wobei zwischen den zu befestigenden Teilen (Montageteil und Festlegungsteil) eine Bewegung - zumindest in einem gewissen Maß - in Richtung der Längsachse des Befestigungselements möglich ist. Die Längsachse des Befestigungselements ist dabei diejenige Achse, in welche sich das Befestigungselement hauptsächlich erstreckt. In anderen Worten ist die Längsachse insbesondere diejenige Achse, in welche sich die Länge des Befestigungselements bestimmt. Das Befestigungselement weist zumindest einen Festlegungsabschnitt, einen Zwischenabschnitt und einen Passungsabschnitt auf. Der Festlegungsabschnitt dient dazu, das Befestigungselement mit einem Festlegungsteil z. B. formschlüssig zu verbinden. Vorteilhafterweise erfolgt diese Verbindung dabei derart, dass keinerlei Relativbewegung zwischen dem Festlegungsteil und dem Festlegungsabschnitt des Befestigungselements - in einem montierten Zustand - möglich ist. Um diese Festlegung zu erreichen weist der Festlegungsabschnitt insbesondere Festlegungsstrukturen auf. Diese Festlegungsstrukturen können dabei beispielsweise durch ein Außengewinde gebildet sein. Alternativ oder zusätzlich bevorzugt können diese Festlegungsstrukturen auch durch ein Innengewinde ausgebildet sein. Unter Festlegungsstrukturen sind jedoch generell jegliche Strukturen zu verstehen, welche es ermöglichen, den Festlegungsabschnitt des Befestigungselements mit einem Festlegungsteil fest zu verbinden. Beispielsweise kann eine solche Festlegungsstruktur auch durch einen Umformprozess entstehen, wie durch Umbördeln von Teilen des Festlegungsabschnitts. Zwischen dem Festlegungsabschnitt und dem Passungsabschnitt - in Richtung der Längsachse gesehen - befindet sich der Zwischenabschnitt des Befestigungselements. Der Zwischenabschnitt ist vorteilhafterweise zumindest abschnittsweise rotationssymmetrisch um die Längsachse ausgebildet. Beispielsweise kann der Zwischenabschnitt zumindest teilweise konisch und/oder zylindrisch ausgebildet sein, um so eine Geometrieveränderung in Richtung der Längsachse herbeizuführen. Dies kann beispielsweise dazu dienen, einen weichen Übergang der äußeren Abmessung zwischen dem Festlegungsabschnitt und dem Passungsabschnitt zu ermöglichen, um ein mechanisch belastbares Befestigungselement zu erreichen. Insbesondere ist der Zwischenbereich dabei derart ausgestaltet, dass dieser vom Festlegungsabschnitt zum Passungsabschnitt verjüngend ausgebildet ist. Hierdurch wird dem vornehmlich auftretenden Biegespannungsverlauf entlang der Längsachsen Rechnung getragen, so dass Material eingespart werden kann, wobei jedoch gleichzeitig eine ausreichende Biegesteifigkeit bzw. Biegefestigkeit des Befestigungselements vorhanden ist. Der Passungsabschnitt des Befestigungselements dient insbesondere dazu, mittelbar oder unmittelbar kontaktierend mit einem Montageteil zu interagieren. Der Passungsabschnitt ist dabei derart beschaffen, dass dieser eine äußere Tragoberfläche aufweist, welche dazu ausgelegt ist, mittel- oder unmittelbar mit dem Montageteil zu kontaktieren. Um eine Bewegbarkeit entlang der Längsachse zwischen dem Befestigungselement und dem Montageteil zu erreichen, ist die Tragoberfläche derart ausgestaltet, dass diese eine Spielpassung aufweist, insbesondere in Relation zu den Flächen des Montageteils, welche den Passungsabschnitt des Befestigungselements in einem montierten Zustand umgeben und/oder kontaktieren können. Beispielsweise kann die Passung des Passungsabschnitts derart ausgebildet sein, dass diese in den Toleranzklassen IT4 bis IT11 nach DIN ISO 286-1 zu finden sind. Der Passungsabschnitt ist dabei im Wesentlichen rotationssymmetrisch um die Längsachse ausgebildet. Unter "im Wesentlichen rotationssymmetrisch" ist zu verstehen, dass die Grundform des Passungsabschnittes, insbesondere die Tragoberfläche(n) des Passungsabschnittes, rotationssymmetrisch um die Längsachse ausgebildet ist, beispielsweise zumindest teilweise konisch oder zylindrisch oder Trilobular oder Fünflobular. Hierbei ist der Passungsabschnitt insbesondere dann im Wesentlichen rotationssymmetrisch, wenn die Tragoberfläche des Passungsabschnitts trilobular kalibriert ist und eine Außendurchmessertoleranz von ≤ 30 µm und eine Trilobularität von 10 µm bis 100 µm aufweist. Alternativ bevorzugt oder zusätzlich bevorzugt kann der Passungsabschnittes auch dann im Wesentlichen rotationssymmetrisch sein, wenn die Tragoberfläche(n) des Passungsabschnittes, eine fünflobular kalibrierte Tragoberfläche aufweist(en), die eine Außendurchmessertoleranz von ≤ 30 µm und eine definierte Unrundheit von 10 µm bis 100 µm aufweist(en). Diese grundlegende Rotationssymmetrie des Passungsabschnittes, insbesondere die Tragoberfläche(n) des Passungsabschnittes, kann jedoch insbesondere durch Schmierrillen oder Vertiefungen, welche auf die Schmierrillen zulaufen, zerstört sein, ohne gegen einen "im Wesentlichen rotationssymmetrischen" Passungsabschnitt zu verstoßen. In anderen Worten kann dies bedeuten, dass der Passungsabschnitt grundlegend zylindrisch, konisch oder tonnenförmig ausgebildet sein kann, wobei in diese ideale rotationssymmetrische Form - um die Längsachse - beispielsweise eine/mehrere Schmierrille(n) oder Schmierwendel(n), eingebracht werden können, ohne die im Wesentlichen rotationssymmetrische Form des Passungsabschnittes zu zerstören. In dem erfindungsgemäßen Passungsabschnitt ist eine oder sind Schmierrillen in die Tragoberfläche eingebracht, welche wie bereits ausgeführt die rotationssymmetrische Ausgestaltung des Passungsabschnittes stören können. Die Schmierrille(n) dient/dienen dabei dazu, Schmierstoffe aufnehmen zu können und einen Eintrag von Schmiermittel in den kontaktierenden Bereich des Passungsabschnitts, insbesondere auf die Tragoberfläche, ermöglichen zu können. Hierdurch wird insbesondere eine Reibungswertereduktion erreicht, so dass das erfindungsgemäße Befestigungselement in der Lage ist, eine leichte Montage zwischen dem Befestigungselement und dem Montageteil zu erreichen. Zusätzlich kann hierdurch auch auf Dauer gesehen die, insbesondere passungsbedingte, Korrosion verhindert bzw. erschwert werden, so dass auch über lange Zeit eine "Leichtgängikeit" der Spielpassung aufrechterhalten werden kann. Die Schmierrille(n) im Passungsabschnitt kann/können dabei rotationssymmetrisch um die Längsachse ausgebildet sein. Beispielsweise ist dies bei einer in sich geschlossenen und ringförmigen Ausgestaltung der Schmierrillen möglich. Alternativ bevorzugt oder zusätzlich bevorzugt kann die Schmierrille oder sämtliche Schmierrillen auch derart ausgestaltet sein, so dass diese den Passungsabschnitt in Richtung der Längsachse vollständig durchdringt(en) bzw. sich vollständig durch / über den Passungsabschnitt in Längsrichtung erstreckt(en). Dies kann beispielsweise dann der Fall sein, wenn die Schmierrillen sich entlang der Längsachse über den gesamten Passungsabschnitt erstreckt(en). Beispielsweise durch eine geradlinig ausgestaltete Schmierrille. Durch das Erstrecken der Schmierrille bzw. zumindest einiger Schmierrillen entlang des gesamten Passungsabschnitts in Richtung der Längsachse kann ein externes Zufügen von Schmiermittel auch im Montagezustand ermöglicht werden, darüber hinaus oder alternativ kann hierdurch auch eine sichere Schmierung des gesamten Passungsabschnitts in Richtung der Längsachse erreicht werden.

Vorteilhafterweise ist in der oder den Schmierrillen ein Schmierstoff eingebracht. In einer bevorzugten Ausführungsform sind in zumindest zwei unterschiedlichen Schmierrillen unterschiedliche Schmierstoffe eingebracht. Hierdurch kann der Schmierstoff in den jeweiligen Schmierrillen an das vorhandene tribologische Belastungsprofil der jeweiligen Rille angepasst werden.

Zweckmäßigerweise ist zumindest eine Schmierrille, insbesondere alle Schmierrillen, derart ausgelegt und/oder ausgebildet, dass bei einer Bewegung des Befestigungselements in Richtung der Längsachse die Tragoberfläche durch die Schmierrille mit Schmiermittel benetzbar ist. In anderen Worten kann dies bedeuten, dass die Schmierrille derart geformt bzw. angeordnet sein kann, dass durch diese die Tragoberfläche - sowohl in Richtung umfänglich um die Längsachse als auch in Richtung der Längsachse - mit Schmiermittel benetzbar ist. Diese Benetzbarkeit kann dabei direkt oder indirekt in Zusammenspiel z.B. mit einer Aufnahme eines Montageteils erfolgen. In anderen Worten kann daher die Schmierrille derart angeordnet und/oder ausgebildet sein, dass diese das Schmiermittel an jeglichen Ort der Tragoberfläche fördern oder transportieren kann, wenn das Befestigungsmittel in Richtung der Längsachse bewegt wird. Hierbei kann es jedoch nötig sein, dass eine derartige Schmiermittelförderung und/oder ein derartiger Schmiermitteltransport nicht alleine durch die Schmierrille ermöglicht ist, sondern hierfür ein Kontaktpartner, wie z.B. eine Aufnahme eines Montageteils, erforderlich ist, welche mit der Schmierrille zusammen wirkt. Beispielsweise kann eine derartige Schmierrille dadurch erreicht werden, dass die Schmierrille als eine Schmierwendel ausgebildet ist.

Vorteilhafterweise ist zumindest eine Schmierrille, insbesondere alle Schmierrillen, eine Schmierwendel. Unter einer Schmierwendel ist zu verstehen, dass die Schmierrille wendelartig in den Passungsabschnitt eingebracht ist. In anderen Worten kann die Schmierwendel ähnlich wie ein Gewindegang ausgestaltet sein. Durch das Vorsehen zumindest einer Schmierwendel wird eine besonders homogene und gute Verteilung des Schmiermittels - sowohl entlang der Längsrichtung als auch entlang der Umfangsrichtung - erreicht.

Zweckmäßigerweise weist die Schmierrille, insbesondere die Schmierwendel, eine Steigung in Richtung der Längsachse aufweist, wobei die Steigung der Schmierrille zu dem Durchmesser der Tragoberfläche in einem Bereich von 0,03 bis 0,4, bevorzugt in einem Bereich von 0,05 bis 0,3 und besonders bevorzugt in einem Bereich von 0,075 bis 0,2, liegt. Die angegebenen Verhältnisse beziehen sich dabei insbesondere auf eine eingängige oder eine mehrgängige Schmierwendel. Sollte die Schmierwendel bzw. die Schmierwendeln zueinander mehrgängig ausgebildet sein, so ist das Verhältnis vorteilhafterweise mit der Anzahl der Gänge zu multiplizieren. Die Steigung der Schmierrille ist dabei insbesondere der Abstand zweier benachbarter gleichgerichteter Flanken derselben Schmierrille bzw. derselben Schmierwendel in Richtung der Längsachse. In anderen Worten kann dies bedeuten, dass die Steigung der Schmierrille derjenige Abstand ist, welche die Schmierrille zu sich selbst in Richtung der Längsrichtung nach einer Umdrehung um die Längsrichtung aufweist. Bei einem Verhältnis von 0,03 bis 0,4 kann eine besonders hohe Tragfähigkeit der Tragoberfläche erreicht werden. Bei einem Verhältnis im Bereich von 0,05 bis 0,3 hat die Anmelderin überraschenderweise herausgefunden, dass eine derartige Tragoberfläche bzw. Schmierrille besonders einfach hergestellt werden kann. Bei einem Verhältnis im Bereich von 0,075 bis 0,2 hat die Anmelderin herausgefunden, dass eine besonders homogene Verteilung von Schmiermittel im Schmierspalt erreicht werden kann.

Alternativ oder zusätzlich bevorzugt liegt der Abstand in Richtung der Längsachse von zwei benachbarten Schmierrillen zu dem Durchmesser der Tragoberfläche in einem Bereich von 0,03 bis 0,4, bevorzugt in einem Bereich von 0,05 bis 0,3 und besonders bevorzugt in einem Bereich von 0,075 bis 0,2. Bei einem Verhältnis von 0,03 bis 0,4 kann eine besonders hohe Tragfähigkeit der Tragoberfläche erreicht werden. Bei einem Verhältnis im Bereich von 0,05 bis 0,3 hat die Anmelderin überraschenderweise herausgefunden, dass eine derartige Tragoberfläche bzw. Schmierrille besonders einfach hergestellt werden kann. Bei einem Verhältnis im Bereich von 0,075 bis 0,2 hat die Anmelderin herausgefunden, dass eine besonders homogene Verteilung von Schmiermittel im Schmierspalt erreicht werden kann.

Bevorzugt liegt die, insbesondere gemittelte, Breite der Schmierrillen in Richtung der Längsachse zu der Steigung der Schmierrille in einem Bereich von 0,003 bis 0,1, bevorzugt in einem Bereich von 0,005 bis 0,05 und besonders bevorzugt in einem Bereich von 0,009 bis 0,03. Bei einem Verhältnis von 0,003 bis 0,1 kann eine besonders hohe Tragfähigkeit der Tragoberfläche erreicht werden. Bei einem Verhältnis im Bereich von 0,05 bis 0,5 hat die Anmelderin überraschenderweise herausgefunden, dass eine derartige Schmierrille besonders einfach hergestellt werden kann. Bei einem Verhältnis im Bereich von 0,009 bis 0,03 hat die Anmelderin herausgefunden, dass eine besonders homogene Verteilung von Schmiermittel im Schmierspalt erreicht werden kann. Die maßgebliche Breite der Schmierrillen in Richtung der Längsachse ist dabei vorteilhafterweise die gemittelte maximale Breite der Schmierrillen in einer Schnittebene, die die Längsachse enthält. In anderen Worten kann die maßgebliche Schnittebene daher eine Längsschnittebene sein.

Alternativ oder zusätzlich bevorzugt liegt die, insbesondere gemittelte, Breite der Schmierrillen in Richtung der Längsachse zu dem Abstand zweier benachbarter Schmierrillen in Richtung der Längsachse in einem Bereich von 0,003 bis 0,1, bevorzugt in einem Bereich von 0,005 bis 0,05 und besonders bevorzugt in einem Bereich von 0,009 bis 0,03. Der Abstand zweier benachbarter Schmierrillen in Richtung der Längsachse kann dabei nicht nur den Abstand zu einer anderen Schmierrille bezeichnen sondern auch den Abstand einer Schmierrille zu sich selbst in Richtung der Längsachse. In anderen Worten kann daher dieser Abstand bei einer einzigen Schmierrille der Steigung der Schmierrille entsprechen. Der Abstand in Richtung der Längsachse zweier benachbarter Schmierrillen ist insbesondere der Abstand der Mittellinien der Schmierrillen zueinander auf der Tragoberfläche in einem Längsschnitt. Bei einem Verhältnis von 0,003 bis 0,1 kann eine besonders hohe Tragfähigkeit der Tragoberfläche erreicht werden. Bei einem Verhältnis im Bereich von 0,005 bis 0,05 hat die Anmelderin überraschenderweise herausgefunden, dass eine derartige Schmierrille besonders einfach hergestellt werden kann. Bei einem Verhältnis im Bereich von 0,009 bis 0,03 hat die Anmelderin herausgefunden, dass eine besonders homogene Verteilung von Schmiermittel im Schmierspalt erreicht werden kann.

Zweckmäßigerweise ist das Befestigungselement einstückig ausgebildet. Hierdurch kann ein besonders belastbares Befestigungselement erreicht werden. Unter einstückig ist dabei zu verstehen, dass das Befestigungsmittel selbst aus einem Grundkörper und/oder Rohling gefertigt ist. Daher ist das Bestfestigungsmittel insbesondere nicht durch mehrere, beispielsweise stoffschlüssig, gefügte Bauteile gebildet.

Vorteilhafterweise ist das Befestigungselement als ein Führungselement ausgebildet. In anderen Worten kann dies bedeuten, dass das Befestigungsmittel dazu dient, ein Bauteil, insbesondere in Richtung der Längsachse, zuführen.

Zweckmäßigerweise ist die Tragoberfläche gewindefrei ausgebildet. Unter einem "gewindefreien" Ausbilden ist dabei zu verstehen, dass die Tragoberfläche kein Gewinde aufweist. Hierdurch kann die Kerbwirkung in der Tragoberfläche reduziert werden, sodass die Belastbarkeit des Befestigungselements gesteigert werden kann.

In einer vorteilhaften Ausführungsform weist der Passungsabschnitt eine Vielzahl von Schmierwendeln auf, wobei insbesondere der Passungsabschnitt 3 bis 20 Schmierwendeln aufweist. Der Passungsabschnitt kann mehrere Schmierwendeln - ähnlich wie bei einem Gewinde - aufweisen, wobei die Schmierwendeln mehrgängig zueinander ausgestaltet sein können. Daher kann der Passungsabschnitt mehrgängige Schmierwendeln, ähnlich wie bei einem mehrgängigen Gewinde, aufweisen. Durch das Vorsehen einer Vielzahl von Schmierwendeln kann eine besonders einfache Verteilung des Schmiermittels erreicht werden, insbesondere auch deshalb, da durch das Vorsehen einer Vielzahl von Schmierwendeln dessen Steigung besonders groß gewählt werden kann. Hierdurch kann die Länge der einzelnen Schmierwendel reduziert werden, so dass auch hoch viskose Schmierstoffe in die Wendel effizient eingebracht werden können. Besonders bevorzugt weist der Passungsabschnitt 3 bis 20 Schmierwendeln auf. Hierdurch kann ein besonders einfaches Nachführen von Schmierstoff erreicht werden. In anderen Worten kann durch das Vorsehen von 3 bis 20 Schmierwendeln erreicht werden, dass auch nach dem Inbetriebnehmen bzw. nach der Montage des Befestigungselements leicht Schmierstoff in den zu schmierenden Spielpassungsspalt zwischen der Tragoberfläche und einer Aufnahme des Montageteils nachgeführt werden kann. Dieser Umstand erlaubt dabei, insbesondere auch ohne die Demontage des Befestigungselements eine Erneuerung des Schmierstoffs zu erreichen.

Vorteilhafterweise ist die Tragoberfläche zylindrisch um die Längsachse ausgebildet. Zylindrisch ist eine Tragoberfläche insbesondere dann, wenn die Tragoberfläche sämtlich zwischen zwei imaginären Zylindern angeordnet ist, welchen eine Durchmesserdifferenz von 30 bis maximal 100 µm aufweisen, und wobei insbesondere die Symmetrieachse dieser beiden gedachten Zylinder auf der Längsachse liegen. Durch das zylindrische Ausgestalten der Tragoberfläche wird eine besonders homogene Spannungsverteilung erreicht, so dass das Befestigungselement hohe Querkräfte sicher aufnehmen kann. Vorteilhafterweise kann diese zylindrische Ausgestaltung der Tragoberfläche insbesondere dadurch entstehen bzw. erreicht werden, dass das rohe Profil in einem nachgeführten Fertigungsschritt kalibriert wird, insbesondere durch Walzen.

Bevorzugt weist der Querschnitt der Schmierrille eine in eine Radialrichtung weisende Öffnung und einen Bodenabschnitt auf, wobei der Bodenabschnitt insbesondere gerundet ist. Der maßgebliche Querschnitt für diese Bestimmung ist dabei der Querschnitt der Schmierrille senkrecht zu der Verlaufsrichtung der Schmierrille. Die Öffnung der Schmierrille ist insbesondere derart gestaltet, dass diese eine Kontur auf den Tragoberflächen schafft. In anderen Worten kann dies bedeuten, dass insbesondere die Öffnung die radialen nach Außen weisenden Enden der Schmierrille ausbilden. Die Radialrichtung ist dabei diejenige Richtung, welche radial von der Längsachse weg weist. Der Bodenabschnitt der Schmierrille ist derjenige Abschnitt derselbigen, welcher die beiden Flanken der Schmierrille miteinander verbindet. Der Bodenabschnitt ist insbesondere durch eine Rundung ausgestaltet. Durch diesen gerundet ausbildendeten Bodenabschnitt resultiert eine besonders einfache Herstellung des Bodenabschnittes und darüber hinaus kann hierdurch eine besonders geringe Kerbwirkung und damit einhergehend eines besonders hohes Maß an Festigkeit erreicht werden. Vorteilhafterweise liegt dabei das Verhältnis des Rundungsdurchmessers des gerundeten Bodenabschnitts zu dem Außendurchmesser der Tragoberfläche des Passungsabschnittes in einem Bereich von 0,025 bis 0,05. Bei einer derartigen Ausgestaltung resultiert ein besonders mechanisch festes und kerbwirkungsarmes Gewinde. Insbesondere ist die Rundung des Bodenabschnittes derart ausgestaltet, dass diese Rundung größer ist als eine Rundung von einem vergleichbaren metrischen Gewinde.

In einer bevorzugten Weiterbildung weist die Öffnung, insbesondere in Richtung der Längsachse, eine kleinere Erstreckung auf als der Bodenabschnitt. In anderen Worten kann dies bedeuten, dass die Schmierrille derart ausgebildet ist, dass diese auf die Öffnung verjüngend zulaufend ausgebildet ist. Daher kann die Schmierrille derart gestaltet sein, dass insbesondere diejenigen Teile der Rille zwischen dem Bodenabschnitt und der Öffnung verjüngend auf die Öffnung zulaufend ausgebildet sind. Durch dieses verjüngende Zulaufen kann ein kontrollierter Schmiermittelaustritt erreicht werden. Insbesondere hält dieser verjüngende Teil einen Teil des Schmiermittels zurück, so dass ein besonders homogener Schmiermittelaustritt entlang der Erstreckung der Schmierrille erreicht wird.

In einer bevorzugten Ausführungsform weist der Querschnitt der Schmierrille einen pfeilförmigen Verbindungsabschnitt auf, wobei der pfeilförmige Verbindungsabschnitt in Richtung der Radialrichtung verjüngend ausgebildet ist. Der Verbindungsabschnitt ist derjenige Teil bzw. diejenigen seitlichen Teile des Querschnitts der Schmierrille, welcher den Bodenabschnitt mit der Öffnung verbindet. Insbesondere ist der Querschnitt dabei in diesem Verbindungsbereich gerade ausgebildet. Unter pfeilförmig ist dabei zu verstehen, dass theoretisch die beiden Verbindungsabschnitte, welche insbesondere schenkelförmig ausgebildet sind, derart ausgebildet, dass diese Teile bzw. Schenkel des Verbindungsabschnitts sich theoretisch außerhalb des Befestigungselements schneiden würden. In anderen Worten kann der Verbindungsabschnitt zumindest teilweise v-förmig ausgebildet sein, wobei der (gedachte) Schnittpunkt der beiden v-förmigen Schenkel sich in Radialrichtung außerhalb des Befestigungselements befinden würde. Diese Art der Ausbildung des Verbindungsabschnitts ist insbesondere besonders einfach herzustellen, so dass hierdurch ein kostengünstiges Befestigungselement resultiert.

In einer bevorzugten Weiterbildung weist der Öffnungswinkel des pfeilförmigen Verbindungsabschnitts einen Winkel im Bereich von 10° bis 70°, bevorzugt in einem Bereich von 20° bis 60° und besonders bevorzugt in einem Bereich 30° bis 50° auf. Der Öffnungswinkel ist dabei der Winkel, welcher zwischen den pfeilförmigen Schenkeln des Verbindungsabschnitts gebildet ist. Bei einem Öffnungswinkel im Bereich von 10° bis 70°resultiert eine besonders einfach herzustellende Schmierrille, so dass ein kostengünstiges Befestigungselement resultiert. Bei einem Öffnungswinkel im Bereich von 20° bis 60° kann eine besonders homogene Schmiermittelverteilung erreicht werden, denn auch hoch viskose Schmiermittel können bei einer derartigen Ausgestaltung homogen über die Länge der Schmierrille in radialer Richtung nach Außen durch die Öffnung in den zu schmierenden Spalt eintreten bzw. eingebracht werden. Bei einem Öffnungswinkel im Bereich von 30° bis 50° resultiert eine besonders kerbwirkungsarme Ausgestaltung des Querschnitts der Schmierrille, so dass hierdurch eine besonders hohe mechanische Festigkeit des Befestigungselements erreicht werden kann.

Erfindungsgemäß liegt das Verhältnis des minimalsten Durchmessers der Schmierrille, insbesondere dessen Bodenabschnitt, zum Durchmesser der Tragoberfläche in einem Bereich von 0,8 bis 0,98, bevorzugt in einem Bereich von 0,85 bis 0,95 und besonders bevorzugt in einem Bereich 0,88 bis 0,92. Der minimalste Durchmesser der Schmierrille bemisst sich insbesondere durch diejenigen Teile bzw. Bereiche der Schmierrille, welche der Längsachse am nächsten sind. Insbesondere ist dies dabei der Bodenabschnitt der Schmierrille. Der Durchmesser der Tragoberfläche ist für die Bestimmung des Verhältnisses insbesondere der mittlere Durchmesser der Tragoberfläche entlang der Längsachse des Passungsabschnittes. Bei einem Verhältnis der Durchmesser im Bereich von 0,8 bis 0,98 resultiert ein besonders hohes Maß an Homogenität des Schmiermittels innerhalb der Schmierrille und innerhalb des zu schmierenden Spaltes. In anderen Worten kann bei diesem Verhältnis besonders viel Schmiermittel aufgenommen werden, so dass hierdurch eine besonders lange Lebensdauer der Schmierung erreicht werden kann. Bei einem Durchmesserverhältnis im Bereich von 0,85 bis 0,95 resultiert ein Passungsabschnitt, welcher ein besonders geringes Maß an Kerbwirkung aufweist. Dies ist insbesondere deshalb entscheidend, weil hohe Kerbwirkungen gerade bei Biegebelastungen einen großen Einfluss auf die mechanische Festigkeit des Befestigungselements haben. Daher resultiert bei einem Durchmesserverhältnis von 0,85 bis 0,95 ein besonders mechanisch belastbares Befestigungselement. Bei einem Durchmesserverhältnis im Bereich von 0,88 bis 0,92 resultiert ein Passungsabschnitt, welcher besonders einfach herzustellen ist, insbesondere durch Kaltumformen. Hierdurch kann daher ein besonders kostengünstiges Befestigungselement erreicht werden.

Vorteilhafterweise liegt der Tragoberflächenanteil des Passungsabschnitts in einem Bereich von 0,3 bis 0,9 und/oder 0,8, bevorzugt in einem Bereich von 0,4 bis 0,7 und besonders bevorzugt in einem Bereich von 0,5 bis 0,65. Der Tragoberflächenanteil des Passungsabschnitts ist dabei derjenige Teil, welcher der tragenden Oberfläche zuzurechnen ist. Beispielsweise kann dieser Anteil dadurch bestimmt werden, dass von der gesamten Oberfläche des Passungsabschnitts die Teile der Oberfläche abgezogen werden, welche durch die Schmierrille bzw. durch die Öffnung der Schmierrille gebildet sind. Mit anderen Worten kann der Tragoberflächenanteil dadurch bestimmt werden, dass auf einem dem Passungsabschnitt gerade umgebenen Zylinder die Schmierrillen und die Tragoberflächen projiziert werden und dann der Anteil der Oberfläche des Zylinders bestimmt wird, welcher durch die Projektion der Tragoberfläche gebildet bzw. bedeckt ist. Bei einem Tragoberflächenanteil des Passungsabschnitts im Bereich von 0,3 bis 0,9 und/oder 0,8 kann eine besonders hohe Tragfähigkeit des Befestigungselements bzw. des Passungsabschnitts erreicht werden, denn hierdurch kann ein besonders hohes Maß an Kräften und Momenten durch die Tragoberfläche aufgenommen werden. Bei einem Tragoberflächenanteil im Bereich von 0,4 bis 0,7 resultiert eine besonders einfach herzustellende Tragoberfläche. Bei einem Tragoberflächenanteil von 0,5 bis 0,65 kann eine besonders gute Schmierstoffleitung erreicht werden, denn ein Großteil des Passungsabschnitts ist bei dieser Art der Ausgestaltung durch Schmierrillen ausgebildet.

Bevorzugt ist in zumindest einer Schmierrille ein Schmiermittel, insbesondere ein Schmierfett oder ein Schmieröl, vorhanden bzw. eingebracht. Durch das Vorsehen von Schmiermittel kann eine besonders einfache Schmierung erreicht werden.

Vorteilhafterweise ist das Befestigungselement durch Kaltumformen hergestellt. Durch das Fertigen des Befestigungselements mittels Kaltumformen wird eine positive Materialbeeinflussung erreicht, denn Kaltumformen führt zu einer mechanischen Verfestigung des Materials, so dass ein kaltumgeformtes Befestigungsmittel deutlich mechanisch widerstandsfähiger im Vergleich zu einem nicht kalt umgeformten Befestigungselement ist.

Vorteilhafterweise bildet der Passungsabschnitt einen Endabschnitt insbesondere in Richtung der Längsachse des Befestigungselements aus. Durch das Ausbilden des Passungsabschnitts als ein Endabschnitt kann ein besonders einfaches Herstellen des Befestigungselements erreicht werden. Unter einem Endabschnitt ist dabei zu verstehen, dass der Passungsabschnitt den letzten distalen Bereich des Befestigungselements, insbesondere in Richtung der Längsachse, ausbildet.

Alternativ bevorzugt kann sich in Richtung der Längsachse betrachtet hinter den Passungsabschnitt auch noch ein Anschlagsabschnitt erstrecken. Durch das Vorsehen eines Anschlagsabschnitts ist es möglich, die zwischen dem Befestigungselement und dem Montageteil mögliche Relativbewegung in Richtung der Längsachse formschlüssig zu verhindern. Beispielsweise kann ein derartiger Anschlagsabschnitt durch einen radial hervorstehenden Anschlag gebildet sein. Vorteilhafterweise erstreckt sich dieser radial hervorstehender Vorsprung (Anschlagsabschnitt) dabei ringförmig um die Längsachse.

Vorzugsweise weist der Festlegungsabschnitt Festlegungsstrukturen in Form eines Innen- und/oder Außengewindes auf. Durch das Vorsehen eines Innen-und/oder Außengewindes kann eine besonders einfache Montage erreicht werden. Alternativ oder zusätzlich bevorzugt kann der Festlegungsabschnitt auch eine Werkzeugangriffkontur aufweisen, wie beispielsweise ein Außensechskant, ein Innensechskant oder einen Innensechsrund. Hierdurch kann insbesondere die Montage des Befestigungselements weiter vereinfacht werden, denn durch das Vorsehen der Werkzeugangriffkontur kann das Verwenden von weiteren Spannwerkzeugen zur Montage vermieden werden.

Vorteilhafterweise bildet der Festlegungsabschnitt einen Endabschnitt, insbesondere in Richtung der Längsachse des Befestigungselements aus. Durch das Vorsehen des Festlegungsabschnittes als ein Endabschnitt resultiert eine besonders einfach herzustellende Geometrie, denn insbesondere beim Umformen können Bereiche, die in den Endabschnitten liegen, leichter mit einem großen Umformgrad bearbeitet werden. Daher resultiert durch das Vorsehen des Festlegungsabschnitts in einem Endbereich bzw. in einem Endabschnitt des Befestigungselements ein besonders leicht und kostengünstig herzustellendes Befestigungselement.

Ein weiterer Aspekt der Erfindung betrifft ein Montagesystem umfassend ein Befestigungselement, insbesondere ein Befestigungselement wie vorgehend und nachgehend beschrieben, und ein Montageteil, wobei das Montageteil eine Aufnahme aufweist, wobei das Befestigungselement einen Passungsabschnitt aufweist, wobei der Passungsabschnitt sich zumindest teilweise in die Aufnahme erstreckt oder dazu ausgelegt ist, sich zumindest teilweise in die Aufnahme zu erstrecken, wobei die Aufnahme und der Passungsabschnitt eine Spielpassung zu einander aufweisen. In anderen Worten kann das Montageelement die obig beschriebenen Eigenschaften und Merkmale des Befestigungselements aufweisen, insbesondere in Hinblick auf den Passungsabschnitt. Alternativ bevorzugt kann das Befestigungselement auch derart ausgestaltet sein, dass im Passungsabschnitt keinerlei Schmierrillen vorhanden sind. Bei einer derartigen Ausgestaltung ist es jedoch erfindungsgemäß zumindest vorteilhaft, wenn die Aufnahme des Montageteils eine Schmierrille aufweist. Diese Schmierrille des Montageteils kann dabei derart ausgestaltet sein, dass diese die obig beschriebenen Eigenschaften und Merkmale der Schmierrille des Befestigungselements aufweisen kann. In anderen Worten kann dies bedeuten, dass die in diesem Dokument beschriebenen Eigenschaften und Merkmale der Schmierrille auch in der Schmierrille des Montageteils verwirklicht sein können. Besonders bevorzugt ist es, wenn sowohl das Befestigungselement als auch das Montageteil eine Schmierrille in Form einer Schmierwendel aufweisen, wenn diese beiden Schmierwendeln gegenläufig zueinander ausgebildet sind. Hierdurch kann erreicht werden, dass ein Verhaken der Schmierwendeln des Befestigungselements mit den Schmierwendeln des Montageteils verhindert wird. Die Aufnahme des Montageteils ist insbesondere eine Ausnehmung, welche vorteilhafterweise komplementär zur Außenkontur des Passungsabschnitts des Befestigungselements ausgebildet ist. Diese konträr zueinander ausgebildeten Abschnitte sind dabei insbesondere als eine Spielpassung zueinander ausgebildet. In anderen Worten kann dies bedeuten, dass das Befestigungselement mit dessen Passungsabschnitt theoretisch kontaktfrei in die Aufnahme des Montageteils einführbar ist. Durch das erfindungsgemäße Montagesystem kann durch die Schmierrillen - im Montageteil, insbesondere in dessen Aufnahme, und/oder in dem Passungsabschnitt des Befestigungselements - erreicht werden, dass in effizienter Weise eine Schmierung und damit eine Reibungsreduktion in dem Spalt zwischen dem Montageteil und dem Befestigungselement erreicht wird.

Vorteilhafterweise ist die Aufnahme des Montageteils mit einem Schmierstoff gefüllt und/oder ist ein Schmierstoff bzw. ein Schmiermittel in der Aufnahme vorhanden. Durch das Einbringen eines Schmierstoffs in die Aufnahme wirkt diese wie eine Art Reservoir für die Bereitstellung des Schmierstoffs. Darüber hinaus kann hierdurch auch noch erreicht werden, dass mit jeder Relativbewegung zwischen dem Befestigungselement und dem Montageteil Schmierstoff in die Schmierrille bzw. in die Schmierrillen durch diese Bewegung eingeführt bzw. gefördert werden kann.

Vorteilhafterweise ist der Passungsabschnitt des Befestigungselements in einem montierten Zustand frei beweglich gegenüber der Aufnahme in Richtung der Längsachse. In anderen Worten ist der Passungsabschnitt nicht derart ausgelegt, dass dieser form- oder kraftschlüssig eine Relativbewegung zwischen dem Befestigungsmittel und der Aufnahme in Richtung der Längsachse verhindern kann. In anderen Worten kann daher der Passungsabschnitt insbesondere u.a. gewindefrei ausgebildet sein.

Zweckmäßigerweise weist der Passungsabschnitt eine äußere Tragoberfläche auf, wobei im Passungsabschnitt zumindest eine Schmierrille vorhanden ist, wobei die Schmierrille derart ausgelegt ist, dass bei einer Bewegung des Befestigungselements in Richtung der Längsachse die Tragoberfläche und/oder der Teil der Aufnahme des Montageteils, welcher mit dem Passungsabschnitt kontaktiert und/oder kontaktieren kann, durch die Schmierrille mit Schmiermittel benetzbar ist. In anderen Worten kann dies bedeuten, dass die Schmierrille derart angeordnet und/oder ausgestaltet ist, dass diese durch eine Längsbewegung des Befestigungselements die Tragoberfläche oder den mit der Tragoberfläche kontaktierenden Teil der Aufnahme, insbesondere vollständig in Richtung der Längsachse und umfänglich um die Längsachse, mit Schmiermittel benetzten kann. Hierdurch kann eine besonders gute und homogene Schmiermittelverteilung erreicht werden. Eine derartige Ausbildung der Schmierrille kann z.B. durch eine Schmierwendel erreicht werden. In anderen Worten kann daher die Schmierrille eine Schmierwendel sein.

In einer Vorteilhaften Ausführungsform ist das Montageteil ein Bremssattel oder ein Teil eines Bremssattels. Hierdurch kann, insbesondere durch die Schmiermittelzufuhr durch die Schmierrille, ein Festsetzen des Bremssattels verhindert werden, sodass die Lebensdauer des Bremssattels und der gesamten Bremsanlage gesteigert werden kann.

Ein weiterer Aspekt der Erfindung betrifft ein Fertigungsverfahren für ein Befestigungselement, insbesondere gemäß einem der vorhergehenden Ausgestaltungen, wobei das Befestigungselement einen Passungsabschnitt mit einer Schmierrille und einer Tragoberfläche aufweist, wobei das Fertigungsverfahren die Schritte umfasst: Bereitstellen eines Rohlings; Bearbeiten des Rohlings, insbesondere durch Kaltumformen, wobei durch das Bearbeiten bzw. durch das Kaltumformen insbesondere die Schmierrille geschaffen wird. Das Fertigungsverfahren kann insbesondere die Schritte Bearbeiten des Rohlings zur Schaffung des Passungsabschnitts - mit der Schmierrille - und der Tragoberfläche umfassen. Durch das erfindungsgemäße Fertigungsverfahren kann kostengünstig ein Befestigungselement hergestellt werden. Bei einer Bearbeitung des Rohlings mittels Kaltumformen resultiert ein besonders mechanisch belastbares Befestigungselement. Das Kaltumformen des Rohlings erfolgt dabei, insbesondere derart, dass in dem Fertigungsverfahren eine Matrize und ein Stempel in Richtung der Längsachse des Befestigungselements zueinander bewegt werden. Das Kaltumformen des Rohlings kann dabei sowohl in einem Arbeitsschritt erfolgen als auch in mehreren, abgestuften, hintereinander erfolgenden Kaltumformungen. Vorteilhafterweise werden die Festlegungsstrukturen bzw. -Strukturen des Festlegungsabschnitts, insbesondere in Form von Gewinden, während des Kaltumformens direkt hergestellt. Hierdurch resultiert eine besonders günstige Fertigung des Befestigungselements. Alternativ bevorzugt wird das Gewinde (oder die Gewinde) in einem separaten anschließenden Walzgang hergestellt. Hierdurch kann eine besonders präzise Fertigung des Gewindes erreicht werden.

Bevorzugt wird, insbesondere nach dem Kaltumformen, die Tragoberfläche des Passungsabschnittes kalibriert, insbesondere durch Walzen. Durch dieses Kalibrieren der Tragoberfläche kann eine besonders ebene bzw. zylindrische Tragoberfläche erreicht werden. Zusätzlich bevorzugt kann durch diese Kalibrierung auch noch erreicht werden, dass die Öffnungen der Schmierrillen verjüngt werden. Hierdurch kann unter anderem der Austritt des Schmiermittels aus der Schmierrille erschwert werden. Vorteilhafterweise erfolgt dieses Kalibrieren dabei durch Walzen, denn hierdurch kann eine besonders kostengünstige Kalibrierung mit besonders engen Toleranzklassen, insbesondere IT 4 bis IT7, erreicht werden. Vorteilhafterweise erfolgt dieser Kalibrierungsschritt dabei nach dem Umformen bzw. Kaltumformen des Werkstückrohlings und kann daher als eine Art Veredelungsarbeitsschritt angesehen werden.

Weitere Vorteile und Merkmale der vorliegenden Erfindung ergeben sich aus der nachfolgenden Beschreibung in Bezug auf die Figuren. Einzelne Merkmale der dargestellten Ausführungsform können dabei auch in anderen Ausführungsformen eingesetzt werden, sofern dies nicht ausdrücklich ausgeschlossen wurde. Es zeigen:
- Figur 1 -: Einen Schnitt durch ein Montagesystem mit einem Befestigungselement;
- Figur 2 -: Eine Detailansicht eines Teils eines Befestigungselements;
- Figur 3 -: Eine Detailansicht eines Schnittes durch einen Teil des Passungsabschnitts; und
- Figur 4 -: Eine weitere Detailansicht eines Schnittes durch einen Passungsabschnitt eines Befestigungselements.
- Figur 5 -: Eine weitere Detailansicht eines Teils eines Befestigungselements

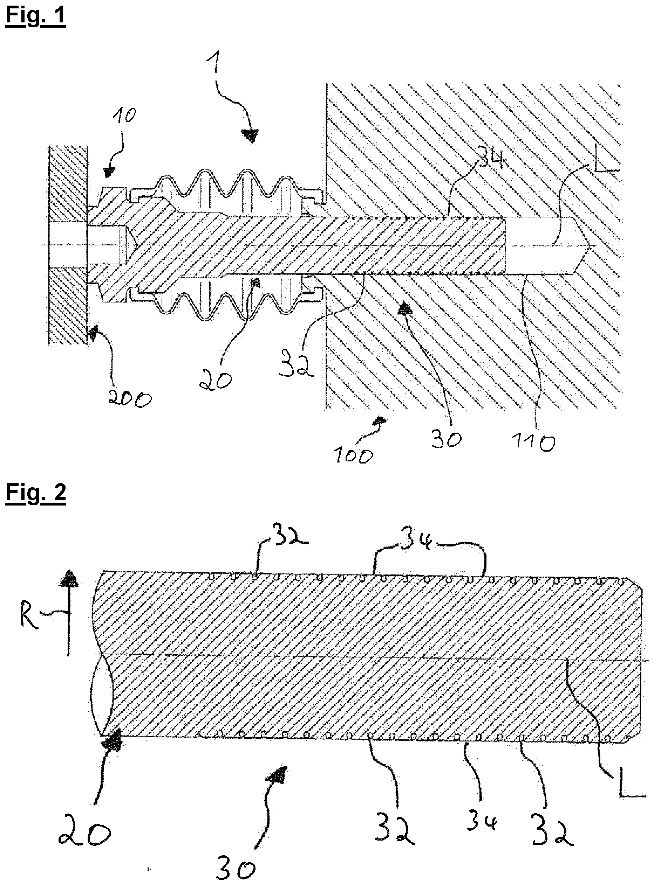

In der **Figur 1** ist ein Montagesystem zu sehen, welches ein Befestigungselement 1, ein Montageteil 100 und ein Festlegungsteil 200 aufweist. Das Festlegungsteil 200 ist mittelbar fest mit dem Festlegungsabschnitt 10 des Befestigungselements 1 verbunden. Hierfür weist der Festlegungsabschnitt 10 Festlegungsstrukturen in Form eines Innengewindes auf. Das Befestigungselement 1 erstreckt sich entlang der Längsachse L, wobei der Festlegungsabschnitt 10 und der Passungsabschnitt 30 jeweils Endabschnitte des Befestigungselements 1 in Richtung der Längsachse L ausbilden. Zwischen dem Festlegungsabschnitt 10 und dem Passungsabschnitt 30 erstreckt sich der Zwischenabschnitt 20 des Befestigungselements 1. Der Passungsabschnitt 30 des Befestigungselements 1 weist eine Schmierrille 32 auf, welche in Form einer Schmierwendel ausgebildet ist und sich spiralartig um die Längsachse L auf der Außenseite des Passungsabschnittes 30 erstreckt. Zwischen den einzelnen Schmierrillen 32 bzw. in dem Zwischenraum zwischen zwei benachbarten Anteilen der Schmierrille 32 befindet sich die Tragoberfläche 34. Diese dient dabei dazu, unmittelbar mit der Aufnahme 110 des Montageteils 100 zu kontaktieren. Durch das Vorsehen der Schmierrille 32 im Passungsabschnitt 30 des Befestigungselements 1 wird erreicht, dass in effizienter Weise Schmiermittel in dem Spalt zwischen der Aufnahme 110 und dem Passungsabschnitt 30 eingebracht werden kann. Um eine Relativbewegung zwischen dem Passungsabschnitt 30 und der Aufnahme 110 zu erreichen, weisen sowohl der Passungsabschnitt 30 als auch die Aufnahme 110 eine Spielpassung auf.

In der **Figur 2** ist eine Detailansicht eines Teils des Befestigungselements 1 gezeigt. Prinzipiell kann der in der Figur 2 gezeigte Detailabschnitt des Befestigungselements 1 zu dem in Figur 1 dargestellten Befestigungselement 1 passen. In der Figur 2 ist zu erkennen, dass das Befestigungselement 1 sowohl über einem Zwischenabschnitt 20 als auch über einen Passungsabschnitt 30 verfügt. Vornehmlich erstreckt sich dabei das Befestigungselement 1 entlang der Längsachse L, wobei radial zu dieser Längsachse L sich die Radialrichtung R erstreckt. An der äußeren Oberfläche in Richtung der Radialrichtung R des Passungsabschnitts 30 ist die Tragoberfläche 34 angeordnet bzw. befindlich, welche dazu dient, Kräfte aufzunehmen und Belastungen bzw. mechanische Kräfte zwischen dem Befestigungselement 1 und einem Montageteil 100 zu übertragen. Wie aus der Figur 2 ersichtlich ist, erstreckt sich auf der äußeren Oberfläche des Passungsabschnitts 30 eine Schmierrille 32. Prinzipiell kann dabei nicht nur eine Schmierrille 32 vorgesehen sein, sondern eine Vielzahl von Schmierrillen 32. Beispielsweise können diese Schmierrillen 32 dabei als Schmierwendeln 32 oder auch als Schmierringe 32 ausgebildet sein.

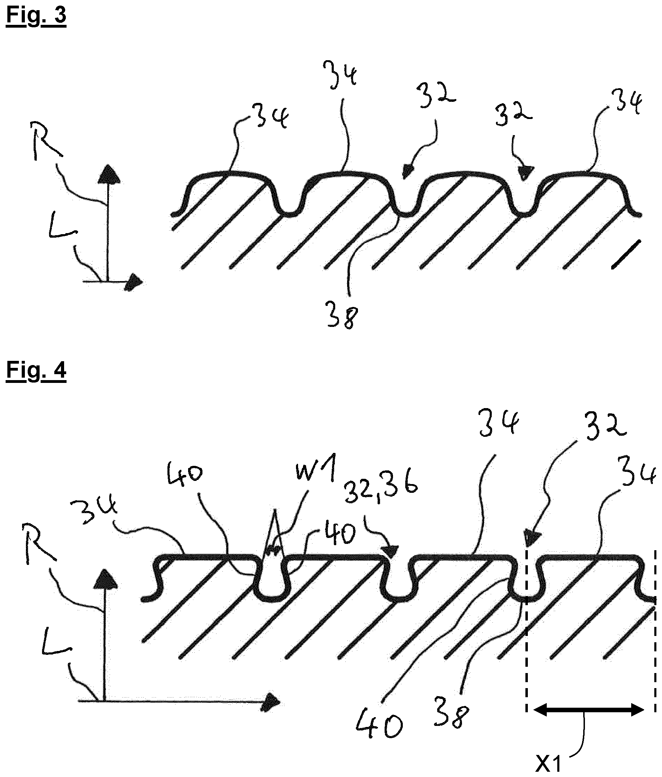

In der **Figur 3** ist eine Detailansicht eines Schnittes durch den Passungsabschnitt 30 gezeigt. Wie aus der Figur 3 ersichtlich, erstreckt sich, insbesondere in Längsrichtung L gesehen, zwischen zwei Schmierrillen 32 jeweils eine Tragoberfläche 34. Diese Schmierrillen 32 weisen dabei einen Bodenabschnitt 38 auf. Bei der in der Figur 3 dargestellten Situation ist der Verlauf der Tragoberfläche 34 jeweils bogenförmig ausgebildet. Beispielsweise resultiert eine derartige Ausgestaltung insbesondere dann, wenn keine Kalibrierung der Tragoberfläche 34 erfolgt.

In der **Figur 4** ist ebenfalls eine Detailansicht eines Schnittes eines Passungsabschnitts 30 gezeigt. Bei der in der Figur 4 dargestellten Situation handelt es sich um ein Befestigungselement 1, dessen Tragoberfläche 34 durch Walzen kalibriert wurde. Beispielsweise ist eine wie in der Figur 4 dargestellte Situation durch eine Kalibrierung der in der Figur 3 dargestellten Situation erreichbar. Wie aus dem Vergleich der Figur 3 und der Figur 4 ersichtlich, kann durch diese Kalibrierung eine deutliche Gestaltungsänderung der Schmierrillen 32 und der Tragoberfläche 34 erreicht werden. Die Schmierrille 32 ist bei der in der Figur 4 dargestellten Ausführungsform derart gestaltet, dass in dies einen gerundeten Bodenabschnitt 38 aufweist, an denen sich die Verbindungsabschnitte 40 anschließen, welche pfeilförmig in Radialrichtung R zulaufend ausgebildet sind. Diese Verbindungsabschnitte 40 weisen dabei einen Öffnungswinkel W1 zueinander auf. In Radialrichtung R wird die Schmierrille 32 durch die Öffnung 36 abschließend ausgebildet. Wie aus der Figur 4 ersichtlich weist dabei die Öffnung 36 in Richtung der Längsachse L eine kleinere Erstreckung auf als der Bodenabschnitt 38 der Schmierrille 32. Durch diese verjüngende Ausgestaltung der Schmierrille 32 in Radialrichtung R kann ein unkontrollierter Schmiermittelaustritt aus der Schmierrille 32 verhindert werden oder zumindest reduziert werden. In der Figur 4 weisen dabei die benachbarteren Schmierrillen 32 in Richtung der Längsachse L einen Abstand X1 zu einander auf.

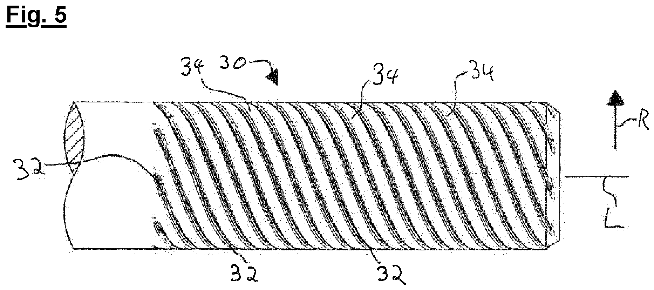

In der **Figur 5** ist eine Außenansicht des Passungsabschnitts 30 gezeigt. Wie aus der Figur 5 ersichtlich, erstreckt sich, insbesondere in Längsrichtung L gesehen, zwischen zwei Schmierrillen 32 jeweils eine Tragoberfläche 34. Diese Schmierrillen 32 weisen dabei einen Bodenabschnitt 38 auf. Bei der in der Figur 5 dargestellten Situation ist der Verlauf der Tragoberfläche 34 zwischen zwei Schmierrillen 32 jeweils spiralförmig, denn die Schmierrillen 32 selbst sind als Schmierwendeln 32 ausgestaltet. In dem Passungsabschnitt 30 sind Vielzahl von Schmierwendeln 32 vorhanden, welche ähnlich einem mehrgängigen Gewinde um die Längsrichtung L ausgebildet sind.

### Bezugszeichenliste:

- 1: - Befestigungselement
- 10: - Festlegungsabschnitt
- 20: - Zwischenabschnitt
- 30: - Passungsabschnitt
- 32: - Schmierrille
- 34: - Tragoberfläche
- 36: - Öffnung
- 38: - Bodenabschnitt
- 40: - Verbindungsabschnitt
- 100: - Montageteil
- 110: - Aufnahme
- 200: - Festlegungsteil
- L: - Längsachse
- R: - Radialrichtung
- W1: - Öffnungswinkel
- X1: - Abstand zweier benachbarter Schmierrillen in Richtung der Längsachse

## Patentansprüche

1. Befestigungselement (1), insbesondere Montagebolzen, umfassend einen Festlegungsabschnitt (10), einen Zwischenabschnitt (20) und einen Passungsabschnitt (30),
wobei sich das Befestigungselement (1) entlang einer Längsachse (L) erstreckt,
wobei der Festlegungsabschnitt (10) Festlegungsstrukturen, insbesondere ein Gewinde, aufweist,
wobei der Zwischenabschnitt (20) in Richtung der Längsachse (L) zwischen dem Festlegungsabschnitt (10) und dem Passungsabschnitt (30) angeordnet ist,
wobei der Passungsabschnitt (30) im Wesentlichen rotationssymmetrisch um die Längsachse (L) ist,
wobei der Passungsabschnitt (30) eine äußere Tragoberfläche (34) aufweist, wobei die Tragoberfläche (34) eine Spielpassung aufweist, und
wobei im Passungsabschnitt (30) zumindest eine Schmierrille (32) vorhanden ist,
**dadurch gekennzeichnet, dass** das Verhältnis des minimalsten Durchmessers der Schmierrille (32), insbesondere dessen Bodenabschnitt (38), zum Durchmesser der Tragoberfläche (34) in einem Bereich von 0,80 bis 0,98 liegt.

2. Befestigungselement (1) gemäß Anspruch 1,
wobei zumindest eine Schmierrille (32), insbesondere alle Schmierrillen (32), derart ausgelegt ist/sind, dass bei einer Bewegung des Befestigungselements (1) in Richtung der Längsachse (L) die Tragoberfläche (34) durch die Schmierrille (32) mit Schmiermittel benetzbar ist.

3. Befestigungselement (1) gemäß einem der vorhergehenden Ansprüche,
wobei zumindest eine Schmierrille (32), insbesondere alle Schmierrillen (32), eine Schmierwendel (32) ist.

4. Befestigungselement (1) gemäß einem der vorhergehenden Ansprüche,
wobei die Schmierrille (32), insbesondere die Schmierwendel (32), eine Steigung in Richtung der Längsachse (L) aufweist,
wobei die Steigung der Schmierrille (32) zu dem Durchmesser der Tragoberfläche (34) in einem Bereich von 0,03 bis 0,4, bevorzugt in einem Bereich von 0,05 bis 0,3 und besonders bevorzugt in einem Bereich von 0,075 bis 0,2, liegt.

5. Befestigungselement (1) gemäß einem der vorhergehenden Ansprüche, wobei die Tragoberfläche (34) zylindrisch um die Längsachse (L) ausgebildet ist.

6. Befestigungselement (1) gemäß einem der vorhergehenden Ansprüche, wobei der Querschnitt der Schmierrille (32) eine in eine Radialrichtung (R) weisende Öffnung (36) und einen Bodenabschnitt (38) aufweist, wobei der Bodenabschnitt (38) insbesondere gerundet ist.

7. Befestigungselement (1) gemäß Anspruch 6,
wobei die Öffnung (36), insbesondere in Richtung der Längsachse (L), eine kleinere Erstreckung aufweist als der Bodenabschnitt (38).

8. Befestigungselement (1) gemäß einem der vorhergehenden Ansprüche, wobei das Verhältnis des minimalsten Durchmessers der Schmierrille (32), insbesondere dessen Bodenabschnitt (38), zum Durchmesser der Tragoberfläche (34) in einem Bereich von 0,85 bis 0,95 und besonders bevorzugt in einem Bereich von 0,88 bis 0,92 liegt.

9. Befestigungselement (1) gemäß einem der vorhergehenden Ansprüche, wobei der Tragoberflächenanteil des Passungsabschnitt (30) in einem Bereich von 0,3 bis 0,8, bevorzugt in einem Bereich von 0,4 bis 0,7 und besonders bevorzugt in einem Bereich von 0,5 bis 0,65 liegt.

10. Montagesystem umfassend ein Befestigungselement (1) nach einem der vorhergehenden Ansprüche und ein Montageteil (100),
wobei sich das Befestigungselement (1) insbesondere entlang einer Längsachse (L) erstreckt,
wobei das Montageteil (100) eine Aufnahme (110) aufweist,
wobei das Befestigungselement (1) einen Passungsabschnitt (30) aufweist, wobei der Passungsabschnitt (30) sich zumindest teilweise in die Aufnahme (110) erstreckt oder dazu ausgelegt ist, sich zumindest teilweise in die Aufnahme (110) zu erstrecken,
wobei die Aufnahme (110) und der Passungsabschnitt (30) eine Spielpassung zu einander aufweisen.

11. Montagesystem gemäß Anspruch 10,
wobei der Passungsabschnitt (30) des Befestigungselements (1) in einem montierten Zustand frei beweglich gegenüber der Aufnahme (110) in Richtung der Längsachse (L) ist.

12. Montagesystem gemäß einem der Ansprüche 10 oder 11,
wobei der Passungsabschnitt (30) eine äußere Tragoberfläche (34) aufweist, wobei im Passungsabschnitt (30) zumindest eine Schmierrille (32) vorhanden ist,
wobei die Schmierrille (32) derart ausgelegt ist, dass bei einer Bewegung des Befestigungselements (1) in Richtung der Längsachse (L) die Tragoberfläche (34) und/oder der Teil der Aufnahme (110) des Montageteils (100), welcher mit dem Passungsabschnitt (30) kontaktiert und/oder kontaktieren kann, durch die Schmierrille (32) mit Schmiermittel benetzbar ist.

13. Montagesystem gemäß einem der Ansprüche 10, 11 oder 12,
wobei das Montageteil (100) ein Teil eines Bremssattels ist.

14. Fertigungsverfahren für ein Befestigungselement (1) gemäß einem der Ansprüche 1 bis 9,
wobei das Befestigungselement einen Passungsabschnitt (30) mit einer Schmierrille (32) und einer Tragoberfläche (34) aufweist,
umfassend die Schritte:
- Bereitstellen eines Rohlings,
- Kaltumformen des Rohlings, wobei durch das Kaltumformen insbesondere die Schmierrille (32) geschaffen wird.

15. Fertigungsverfahren für ein Befestigungselement (1) gemäß Anspruch 14, wobei, insbesondere nach dem Kaltumformen, die Tragoberfläche (34) des Passungsabschnitts (30) gewalzt wird.

## Claims

1. Fastening element (1), in particular mounting bolt, comprising a fixing section (10), an intermediate section (20) and a fitting section (30),
wherein the fastening element (1) extends along a longitudinal axis (L), wherein the fastening portion (10) has fastening structures, in particular a thread,
wherein the intermediate portion (20) is arranged in the direction of the longitudinal axis (L) between the fixing portion (10) and the fitting portion (30), wherein the fitting portion (30) is substantially rotationally symmetrical about the longitudinal axis (L),
said fitting portion (30) having an outer support surface (34),
wherein the bearing surface (34) has a clearance fit, and
wherein at least one lubricating groove (32) is provided in the fitting section (30),
**characterised in that** the ratio of the minimum diameter of the lubricating groove (32), in particular its bottom portion (38), to the diameter of the bearing surface (34) is in a range from 0.80 to 0.98.

2. Fastening element (1) according to claim 1,
wherein at least one lubricating groove (32), in particular all lubricating grooves (32), is/are designed in such a way that, during a movement of the fastening element (1) in the direction of the longitudinal axis (L), the supporting surface (34) can be wetted with lubricant through the lubricating groove (32).

3. Fastening element (1) according to one of the preceding claims,
wherein at least one lubricating groove (32), in particular all lubricating grooves (32), is a lubricating helix (32).

4. Fastening element (1) according to one of the preceding claims,
wherein the lubrication groove (32), in particular the lubrication helix (32), has a pitch in the direction of the longitudinal axis (L),
wherein the pitch of the lubrication groove (32) to the diameter of the bearing surface (34) is in a range from 0.03 to 0.4, preferably in a range from 0.05 to 0.3 and particularly preferably in a range from 0.075 to 0.2.

5. Fastening element (1) according to one of the preceding claims,
wherein the supporting surface (34) is cylindrical about the longitudinal axis (L).

6. Fastener (1) according to any one of the preceding claims,
wherein the cross-section of the lubrication groove (32) has an opening (36) facing in a radial direction (R) and a bottom portion (38),
wherein the bottom portion (38) is in particular rounded.

7. Fastening element (1) according to claim 6,
wherein the opening (36), in particular in the direction of the longitudinal axis (L), has a smaller extension than the bottom portion (38).

8. Fastening element (1) according to one of the preceding claims,
wherein the ratio of the minimum diameter of the lubricating groove (32), in particular the bottom portion (38) thereof, to the diameter of the bearing surface (34) is in a range from 0.85 to 0.95 and particularly preferably in a range from 0.88 to 0.92.

9. Fastening element (1) according to one of the preceding claims,
wherein the bearing surface portion of the fitting portion (30) is in a range of 0.3 to 0.8, preferably in a range of 0.4 to 0.7 and more preferably in a range of 0.5 to 0.65.

10. Mounting system comprising a fastening element (1) according to one of the preceding claims and a mounting part (100),
wherein the fastening element (1) extends in particular along a longitudinal axis (L),
wherein the mounting part (100) comprises a receptacle (110),
wherein the fastening element (1) comprises a fitting portion (30),
wherein the fitting portion (30) extends or is adapted to extend at least partially into the receptacle (110),
wherein the receptacle (110) and the mating portion (30) have a clearance fit with respect to each other.

11. Mounting system according to claim 10,
wherein the fitting portion (30) of the fastening element (1) is freely movable relative to the receptacle (110) in the direction of the longitudinal axis (L) in a mounted state.

12. A mounting system according to any one of claims 10 or 11,
wherein the fitting portion (30) has an outer supporting surface (34), wherein at least one lubrication groove (32) is provided in the fitting portion (30),
wherein the lubrication groove (32) is designed such that, upon movement of the fastener (1) in the direction of the longitudinal axis (L), the bearing surface (34) and/or the part of the receptacle (110) of the mounting part (100) which can contact and/or make contact with the fitting portion (30) can be wetted with lubricant through the lubrication groove (32).

13. A mounting system according to any one of claims 10, 11 or 12,
wherein the mounting part (100) is a part of a brake caliper.

14. A method of manufacturing a fastener (1) according to any one of claims 1 to 9,
wherein the fastening member has a fitting portion (30) with a lubricating groove (32) and a supporting surface (34),
comprising the steps of:
- Providing a blank,
- cold forming the blank, wherein the cold forming in particular creates the lubricating groove (32).

15. Manufacturing method for a fastening element (1) according to claim 14,
wherein, in particular after cold forming, the bearing surface (34) of the fitting section (30) is rolled.

## Revendications

1. Elément de fixation (1), en particulier boulon de montage, comprenant une portion d'immobilisation (10), une portion intermédiaire (20) et une portion d'ajustement (30),
dans lequel
l'élément de fixation (1) s'étend le long d'un axe longitudinal (L),
la portion d'immobilisation (10) présente des structures d'immobilisation, en particulier un filetage,
la portion intermédiaire (20) est disposée dans la direction de l'axe longitudinal (L) entre la portion d'immobilisation (10) et la portion d'ajustement (30),
la portion d'ajustement (30) est sensiblement à symétrie de révolution autour de l'axe longitudinal (L),
la portion d'ajustement (30) présente une surface porteuse extérieure (34), la surface porteuse (34) présente un ajustement avec jeu, et
au moins une rainure de lubrification (32) existe dans la portion d'ajustement (30),
**caractérisé en ce que** le rapport du diamètre minimal de la rainure de lubrification (32), en particulier de sa portion de fond (38), sur le diamètre de la surface porteuse (34) est compris dans une plage de 0,80 à 0,98.

2. Elément de fixation (1) selon la revendication 1,
dans lequel au moins une rainure de lubrification (32), en particulier toutes les rainures de lubrification (32), est/sont conçue(s) de telle sorte que, lors d'un mouvement de l'élément de fixation (1) dans la direction de l'axe longitudinal (L), la surface porteuse (34) peut être mouillée avec un lubrifiant par la rainure de lubrification (32).

3. Elément de fixation (1) selon l'une des revendications précédentes,
dans lequel au moins une rainure de lubrification (32), en particulier toutes les rainures de lubrification (32), est une hélice de lubrification (32).

4. Elément de fixation (1) selon l'une des revendications précédentes,
dans lequel la rainure de lubrification (32), en particulier l'hélice de lubrification (32), présente un pas dans la direction de l'axe longitudinal (L), le pas de la rainure de lubrification (32) par rapport au diamètre de la surface porteuse (34) est compris dans une plage de 0,03 à 0,4, de préférence dans une plage de 0,05 à 0,3, et de manière particulièrement préférée dans une plage de 0,075 à 0,2.

5. Elément de fixation (1) selon l'une des revendications précédentes,
dans lequel la surface porteuse (34) est cylindrique autour de l'axe longitudinal (L).

6. Elément de fixation (1) selon l'une des revendications précédentes,
dans lequel la section transversale de la rainure de lubrification (32) présente une ouverture (36), dirigée dans une direction radiale (R), et une portion de fond (38),
la portion de fond (38) est en particulier arrondie.

7. Elément de fixation (1) selon la revendication 6,
dans lequel l'ouverture (36) présente, en particulier dans la direction de l'axe longitudinal (L), une extension inférieure à celle de la portion de fond (38).

8. Elément de fixation (1) selon l'une des revendications précédentes,
dans lequel le rapport du diamètre minimal de la rainure de lubrification (32), en particulier de sa portion de fond (38), sur le diamètre de la surface porteuse (34) est compris dans une plage de 0,85 à 0,95 et de manière particulièrement préférée dans une plage de 0,88 à 0,92.

9. Elément de fixation (1) selon l'une des revendications précédentes,
dans lequel la proportion de surface porteuse de la portion d'ajustement (30) est comprise dans une plage de 0,3 à 0,8, de préférence dans une plage de 0,4 à 0,7, et de manière particulièrement préférée dans une plage de 0,5 à 0,65.

10. Système de montage comprenant un élément de fixation (1) selon l'une des revendications précédentes, et une pièce de montage (100),
dans lequel l'élément de fixation (1) s'étend en particulier le long d'un axe longitudinal (L),
la pièce de montage (100) présente un logement (110),
l'élément de fixation (1) comprend une portion d'ajustement (30),
la portion d'ajustement (30) s'étend au moins partiellement dans le logement (110) ou est conçue pour s'étendre au moins partiellement dans le logement (110),
le logement (110) et la portion d'ajustement (30) présentent un ajustement avec jeu l'un par rapport à l'autre.

11. Système de montage selon la revendication 10,
dans lequel, dans un état monté, la portion d'ajustement (30) de l'élément de fixation (1) peut se déplacer librement par rapport au logement (110) dans la direction de l'axe longitudinal (L).

12. Système de montage selon l'une des revendications 10 ou 11,
dans lequel la portion d'ajustement (30) présente une surface porteuse extérieure (34),
au moins une rainure de lubrification (32) existe dans la portion d'ajustement (30),
la rainure de lubrification (32) est conçue de telle sorte que, lors d'un mouvement de l'élément de fixation (1) dans la direction de l'axe longitudinal (L), la surface porteuse (30) et/ou la partie du logement (110) de la pièce de montage (100), laquelle est en contact et/ou peut être en contact avec la portion d'ajustement (30), peut être mouillée avec un lubrifiant par la rainure de lubrification (32).

13. Système de montage selon l'une des revendications 10, 11 ou 12, dans lequel la pièce de montage (100) est une partie d'un étrier de frein.

14. Procédé de fabrication d'un élément de fixation (1) selon l'une des revendications 1 à 9,
dans lequel l'élément de fixation comprend une portion d'ajustement (30) munie d'une rainure de lubrification (32) et d'une surface porteuse (34), comprenant les étapes consistant à :
- fournir une ébauche,
- déformer à froid l'ébauche, la déformation à froid permettant en particulier de créer la rainure de lubrification (32).

15. Procédé de fabrication d'un élément de fixation (1) selon la revendication 14,
dans lequel, en particulier après la déformation à froid, la surface porteuse (34) de la portion d'ajustement (30) est laminée.
